# EUROPEAN PATENT APPLICATION

(11) **EP 3 038 038 A1**
(43) Date of publication of application: **29.06.2016**
(21) Application number: 14838422.5
(22) Date of filing: 19.08.2014
(51) Int. Cl.: G06Q 20/32, G06Q 20/24

(54) **MOBILE CARD SHARING SERVICE METHOD AND SYSTEM WITH ENHANCED SECURITY**

(30) Priority: 20.08.2013 KR 20130098505
(71) Applicant: Instapay Inc., Seoul 153-772 (KR)
(72) Inventor: BAE, Jae Kwang, Seoul 135-845 (KR)
(74) Representative: V.O.
(86) International application number: PCT/KR2014/007666
(87) International publication number: WO 2015/026126

(57) **Abstract**

A mobile card sharing service method and system with enhanced security are disclosed. A payment means sharing method comprises the steps of: registering a payment means related to a first mobile terminal; making a request for sharing of the payment means to at least one second mobile terminal which has been selected by the first mobile terminal; and registering a payment means related to the second mobile terminal if the second mobile terminal accepts the request for sharing of the payment means.

## Description

### [Technical Field]

Embodiments of the inventive concepts described herein relate to technologies for providing the convenience of use of payment means such as mobile cards and expanding use of the payment means.

### [Background Art]

Plastic magnetic cards and plastic removable IC cards with simple availability and portability have been more used as conventional payment means than cash. There are a variety of card types according to types of payments means such as credit cards, check cards, debit cards, and gift cards.

A payment method using these plastic magnetic cards and these plastic removable IC cards is a method where an affiliated store inquires transaction approval of a corresponding card company through a value added network (VAN) company which is an agent and processes payment according to the approved result if a terminal installed in the affiliated store receives information (e.g., a card number, an expiration date, a card issuer, and the like) necessary for card transaction approval.

Korean Patent No. 10-0431096 (issued April 30, 2004) discloses technologies of processing credit card transaction which proceeds between an affiliated store and a financial institute through a VAN company which is an agent.

Recently, as the age of a mobile wallet which uses mobile devices such as mobile phones, carried with persons at all times, as bankbooks, cash cards, credit cards, debit cards, membership cards, and the like have been resurfaced, there have been a huge increase in use of mobile cards, card information (e.g., a card number, an expiration date, a card issuer, and the like) of which is directly mounted on mobile devices.

### [Disclosure]

### [Technical Problem]

Embodiments of the inventive concepts provide a payment means sharing method for sharing a mobile card between users and a system therefor.

Embodiments of the inventive concepts provide a payment means sharing method for guaranteeing security of mobile payment and a system therefor.

### [Technical Solution]

One aspect of embodiments of the inventive concept is directed to provide a payment means sharing method. The payment means sharing method may include registering a payment means in connection with a first mobile terminal, requesting at least one second mobile terminal selected by the first mobile terminal to share the payment means, and registering the payment means in connection with the second mobile terminal if the second mobile terminal accepts to share the payment means.

The requesting to share the payment means may include sending a message, including a uniform resource locator (URL) associated with a service dedicated application, to the second mobile terminal if a sharing request signal for the payment means is received from the first mobile terminal. The registering of the payment means in connection with the second mobile terminal may include performing an authentication procedure for at least one of device authentication of authenticating the second mobile terminal or user's own authentication of authenticating a user of the second mobile terminal and registering the payment means.

The registering of the payment means in connection with the second mobile terminal may include registering a password, entered by the second mobile terminal, with respect to the payment means.

The payment means sharing method may further include providing payment information corresponding to the payment means to the second mobile terminal or an affiliated store terminal if the second mobile terminal selects the payment means to pay in the affiliated store terminal. The providing of the payment information corresponding to the payment means to the second mobile terminal or the affiliated store terminal may include performing an authentication procedure for at least one of device authentication of authenticating the second mobile terminal for the payment means, user's own authentication of authenticating a user of the second mobile terminal, or transaction authentication of authenticating a password registered by the second mobile terminal and providing the payment information.

The payment means sharing method may further include requesting the first mobile terminal to accept payment using the payment means through the second mobile terminal or an affiliated store terminal if the second mobile terminal selects the payment means to pay in the affiliated store terminal and providing payment information corresponding to the payment means to the second mobile terminal or the affiliated store terminal if the first mobile terminal accepts the payment using the payment means. The providing of the payment information corresponding to the payment means to the second mobile terminal or the affiliated store terminal may include performing an authentication procedure for at least one of device authentication of authenticating the second mobile terminal for the payment means, user's own authentication of authenticating a user of the second mobile terminal, or transaction authentication of authenticating a password registered by the second mobile terminal and providing the payment information.

Another aspect of embodiments of the inventive concept is directed to provide a payment means sharing method. The payment means sharing method may include registering a payment means in connection with a first mobile terminal, requesting at least one second mobile terminal selected by the first mobile terminal to share the payment means, registering the payment means in connection with the second mobile terminal if the second mobile terminal accepts to share the payment means, requesting the first mobile terminal to pay using the payment means if the second mobile terminal selects the payment means to pay in an affiliated store terminal, and processing payment in the affiliated store terminal using payment information corresponding to the payment means by interworking with the first mobile terminal.

Still another aspect of embodiments of the inventive concept is directed to provide a file distribution system for distributing a file of an application installed in a user terminal to share a payment means between users. The file distribution system may include a file transfer unit configured to transfer the file according to a request of the user terminal. The application may include a module for controlling the user terminal to read and display a list of payment means registered in a service server in connection with the user terminal, a module for controlling the user terminal to display a list of contact phone numbers registered in the user terminal if an instruction to select the payment means in the list is input from the user terminal, and a module for controlling the user terminal to request the service server to share the payment means with a counterpart terminal if an instruction to select the at least one counterpart terminal included in a list of the contact phone numbers is input from the user terminal. The service server may send a sharing request message for the payment means to the counterpart terminal and may register the payment means in connection with the counterpart terminal if the counterpart terminal accepts to share the payment means.

Still another aspect of embodiments of the inventive concept is directed to provide a file distribution system for distributing a file of an application installed in a user terminal to share a payment means between users. The file distribution system may include a file transfer unit configured to transfer the file according to a request of the user terminal. The application may include a module for controlling the user terminal to display a sharing request message if the sharing request message for a payment means of a counterpart terminal is received from a service server and a module for controlling the user terminal to send a sharing acceptance intention to the service server if the sharing acceptance intention for the payment means is input from a user through a path according to link information included in the sharing request message. The service server may register the payment means in connection with the counterpart terminal, may send the sharing request message to the user terminal according to a request to share the payment means by the counterpart terminal, and may register the payment means according to the sharing acceptance intention of the user terminal in connection with the user terminal.

Still another aspect of embodiments of the inventive concept is directed to provide a payment means sharing system. The payment means sharing system may include a storing unit configured to store a payment means in connection with a first mobile terminal, a request unit configured to request at least one second mobile terminal selected by the first mobile terminal to share the payment means, an authentication unit configured to perform an authentication procedure for at least one of device authentication of authenticating the second mobile terminal if the second mobile terminal accepts to share the payment or user's own authentication of authenticating a user of the second mobile terminal, and a registration unit configured to register the payment means in connection with the second mobile terminal if the authentication procedure is completed and to register a password, entered by the second mobile terminal, with respect to the payment means. In this case, the authentication unit may perform an authentication procedure for at least one of the device authentication, the user's own authentication, or transaction authentication of authenticating the password with respect to the payment means when the second mobile terminal attempts to pay using the payment means.

### [Advantageous Effects]

Although a user has a limit for issuing a card or does not own a real card, since he or she may use an electronic payment means together by sharing the payment means such as a mobile card between users, a payment means sharing system may increase the convenience of use of the payment means and may more expand the use of the payment means.

The payment means sharing system may provide a support to safely use a payment means through a security-enhanced environment by applying several personal authentication procedures for user's own authentication, device authentication, transaction authentication, and the like in sharing the payment means between users.

### [Description of Drawings]

FIG. 1 is a drawing illustrating schematic relation between a user and a service server according to an exemplary embodiment of the inventive concept;
FIG. 2 is a signal sequence diagram illustrating a payment means sharing method for sharing a payment means between users according to an exemplary embodiment of the inventive concept;
FIG. 3 is a drawing illustrating a service screen of a user terminal which requests to share a payment means according to an exemplary embodiment of the inventive concept;
FIGS. 4, 5, and 6 are drawings illustrating a service screen of a user terminal which is requested to share a payment means according to an exemplary embodiment of the inventive concept;
FIG. 7 is a signal sequence diagram illustrating a payment means sharing method for sharing a payment means between users according to another exemplary embodiment of the inventive concept; and
FIG. 8 is a block diagram illustrating a configuration of a payment means sharing system for sharing a payment means between users according to an exemplary embodiment of the inventive concept.

### [Best Mode]

Embodiments of the inventive concepts described herein relate to a payment means sharing method for sharing a payment means between users and a system therefor.

The 'payment means' used herein may refer to a real card such as a credit card, a check card, a debit card, a gift card, a membership card, and the like and may comprehensively refer to a mobile card, a card function of which is directly mounted on a terminal.

### [Mode for Invention]

Hereinafter, a description will be given in detail for exemplary embodiments of the inventive concept with reference to the following drawings.

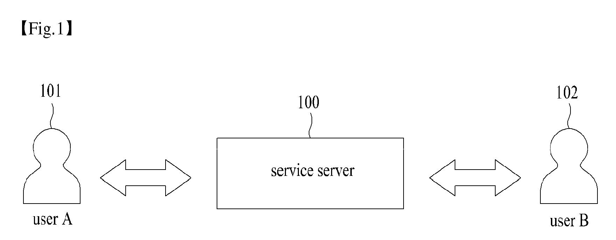

FIG. 1 is a drawing illustrating schematic relation between a user and a service server according to an exemplary embodiment of the inventive concept. FIG. 1 illustrates user A and B 101 and 102 and a service server 100. In general, the user A and B 101 and 102 may refer to user terminals used by the user A and B 101 and 102, respectively. Arrows in FIG. 1 may mean that data may be communicated between the user terminals used by the user A and B 101 and 102 and the service server 100 using wired and wireless networks.

The service server 100 may provide an app service for sharing a payment means between the user A and B 101 and 102, each of which has an installed service dedicated application. In this case, the service server 100 may play a role as a service platform which provides a mobile wallet service by registering and managing a payment means for each of the user A and B 101 and 102 and may implement a function for sharing a payment means between the user A and B 101 and 102 through this service platform. Therefore, a service dedicated application (hereinafter referred to as a 'payment means management app') associated with a function of sharing a payment means may be implemented in the form of a program which operates independently or may be configured in the in-app form of a specific application to operate on the specific application.

Terminals used by the users A and B 101 and 102 may include all terminals, such as a smartphone, a tablet personal computer (PC), a laptop computer, a digital multimedia broadcasting (DMB) terminal, and a portable multimedia player (PMP), in which the payment means management app may be installed and executed. In this case, the above-mentioned terminals may perform an overall service operation of configuring a service screen, inputting data, communicating data, and storing data under control of the payment means management app.

A basic service scenario according to an exemplary embodiment of the inventive concept is as follows:
(1) The user A 101 may register and manage payment means he or she owns actually through the payment means management app.
(2) The user A 101 may request the user B 102 to share a specific payment means among his or her own payment means with the user B 102.
(3) The user B 102 may accept to share the payment means requested to share by the user A 101.
(4) The user B 102 may use the payment means requested to share by the user A 101 upon paying in an affiliated store.

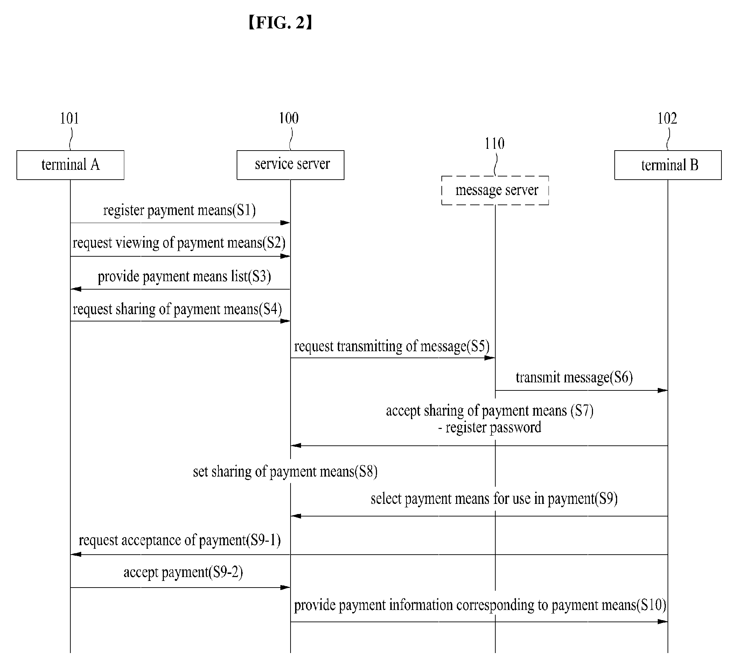

Referring to FIG. 2, a description will be given in detail for a payment means sharing method according to an exemplary embodiment of the inventive concept.

First of all, in step S1, the terminal A 101 may receive payment information (e.g., a credit card, an expiration date, an issuer, and the like) corresponding to a payment means from the user A and may send the received payment information to the service server 100, through the payment means management app to register at least one payment means. In this case, the payment means may be issued to the user A. In other words, the user A may be an actual owner of a payment means. Also, the terminal A 101 may receive a password for a payment means from the user A and may send the received password to the service server 100 to register the password of the payment means. In this case, the password may be used as transaction information for identifying the user A in a payment process using a payment means or a sharing request process for the payment means.

The service server 100 may store and manage payment information and a password, corresponding to a payment means, in connection with the terminal A 101 and the user A. In this case, the service server 100 may perform an authentication procedure for at least one of device authentication of authenticating the terminal A 101 in a process of registering a payment means or user's own authentication of authenticating the user A. The device authentication used herein may refer to an authentication scheme of identifying subscriber information of a terminal using a serial number of the terminal, such as international mobile identity (IMI) and a subscriber identity module (SIM). The user's own authentication used herein may be refer to an authentication scheme of identifying the user himself or herself using authentication through a mobile phone of a user or using a public certificate.

In step S2, the terminal A 101 may access the service server 100 through the payment means management app and may send a request to view a previously registered payment means to the service server 100. Therefore, in step S3, the service server 100 may provide a list of payment means, registered in connection with the terminal A 101 and the user A, to the terminal A 101 according to the request to view the payment means of the terminal A 101.

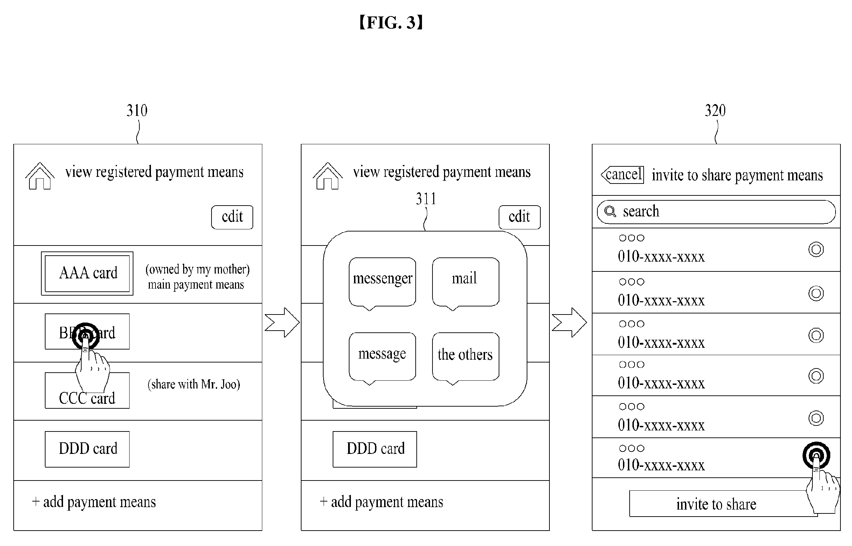

As the user A of the terminal A 101 selects a specific payment means from the list of the payment means, in step S4, the terminal A 101 may send a sharing request signal for the selected payment means to the service server 100. In other words, after receiving selection of a payment means to share from the user A, the terminal A 101 may receive selection of a medium to be used upon requesting to share the corresponding payment means and at least one or more of friends who are the parties to share the corresponding payment means. In this case, the medium may refer to all means, such as a messenger, a mail, a message, and a social networking service (SNS), which may send a message. For example, referring to FIG. 3, the terminal A 101 may display a list 310 of payment means registered in connection with the user A. If the user A selects a payment means to share from the payment means list 310, the terminal A 101 may provide an available medium list 311. If the user A selects a specific medium (e.g., a messenger) from the medium list 311, the terminal A 101 may receive a list of friends registered in an app of the selected specific medium or a list of contact phone numbers registered in the terminal A 101 and may display a number list 320 in the basic form of an app. In this case, the terminal A 101 may receive selection of at least one of friends included in the number list 320 from the user A and may send information about a payment means selected by the user A and information about a medium and a friend to transmit a sharing intention to the service server 100 to share the payment means.

The service server 100 may receive a sharing request signal for a payment means from the terminal A 101 and may request at least one counterpart terminal (hereinafter referred to as a 'terminal B 102') selected by the terminal A 101 to share the payment means of the terminal A 101 according to the sharing request signal of the terminal A 101. In this case, when the terminal A 101 requests the service server 100 to share a specific payment means, the service server 100 may perform an authentication procedure for at least one of device authentication of authenticating the terminal A 101, user's own authentication of authenticating the user A, or transaction authentication of authenticating a password set in the specific payment means and may send a sharing request intention of the user A to the terminal B 102. Additionally, the service server 100 may generate link information for sharing a payment means selected by the terminal A 101. In this case, the service server 100 may generate an abbreviated uniform resource locator (URL) which includes an instructions to determine whether a payment means management app is installed in the terminal B 102 which is a shared party terminal and an instruction to change a current channel to a channel of downloading and installing the payment means management app according to whether the payment means management app is installed or a channel of registering a payment means requested to share by the user A.

In step S5, the service server 100 may interwork with a message server 110 corresponding to a medium selected by the terminal A 101, may send the generated abbreviated URL and a predetermined comment (e.g., the comment that 'the user A requests to share his or her payment means') to the corresponding message server 110, and may simultaneously request the message server 110 to send a message to the terminal B 102 which is a counterpart selected by the terminal A 101. In this case, in step S6, the message server 110 may send a message, including the abbreviated URL generated by the service server 100, to the terminal B 102 according to the request of the service server 100. In other words, the service server 100 may send a sharing request intention of the user A for a payment means to the user B using a short message service (SMS), a push message service, and various other communication schemes.

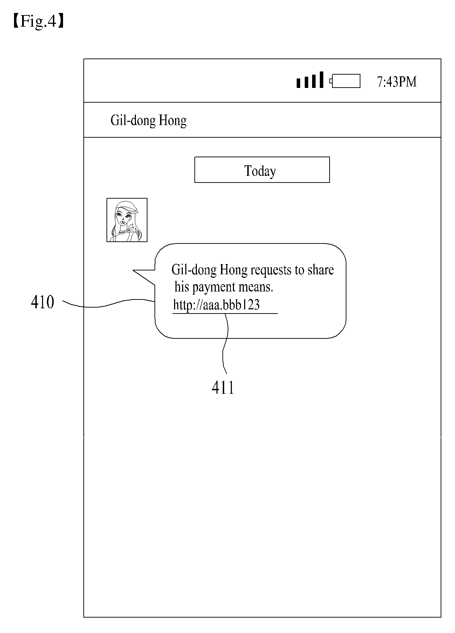

If receiving the message from the service server 100 through the message server 110, the terminal B 102 may display the received message. For example, if the terminal A 101 selects a messenger to share its payment means and if receiving a message from the service server 100, the terminal B 102 may execute a corresponding messenger app, as shown in FIG. 4, may display a message 410 including an abbreviated URL 411 on a messenger chat screen of chatting with the terminal A 101, and may receive an instructions to select the abbreviated URL 411 included in the message 410 from the user B.

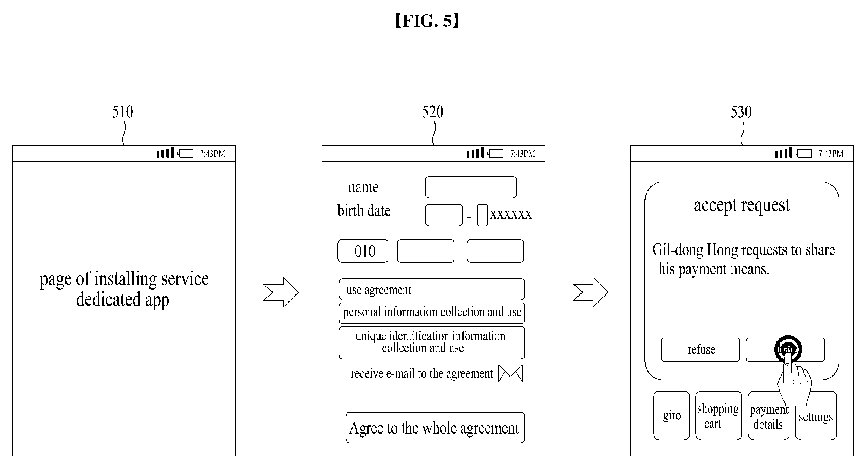

Therefore, if receiving an instruction to select an abbreviated URL included in a message, the terminal B 102 may execute an environment in which the user B may set to share a payment means of the user A according to an instruction included in the abbreviated URL. For example, referring to FIG. 5, the terminal B 102 may determine whether a payment means management app is installed (1). If the payment means management app is not installed (2-1), the terminal B 102 may access an application market and may move to an app installation page 510 for downloading and installing the payment means management app. Therefore, the user B may download and install the payment means management app in the terminal B 102 of the user B. In contrast, if the payment means management app is installed (2-2), the terminal B 102 may automatically execute the payment means management app and may provide a path of registering a payment means requested to share by the user A as a payment means of the user B.

If the payment means management app is executed, the terminal B 102 may determine whether the user B is registered under control of the payment means management app. When the user B is not registered, as shown in FIG. 5, the terminal B 102 may display a user's own registration screen 520. In this case, the service server 100 may perform an authentication procedure for at least one of user's own authentication or device authentication through interworking with the payment means management app and may register the user B according to information input from the user B. Meanwhile, if the user B is registered under control of the payment means management app, the terminal B 102 may display a request acceptance screen 530 for receiving a sharing acceptance intention of the user B with respect to a payment means requested to share by the user A. Therefore, the user B may selectively input a sharing refusal intention or a sharing acceptance intention for a payment means, requested to share by the user A, through the request acceptance screen 530.

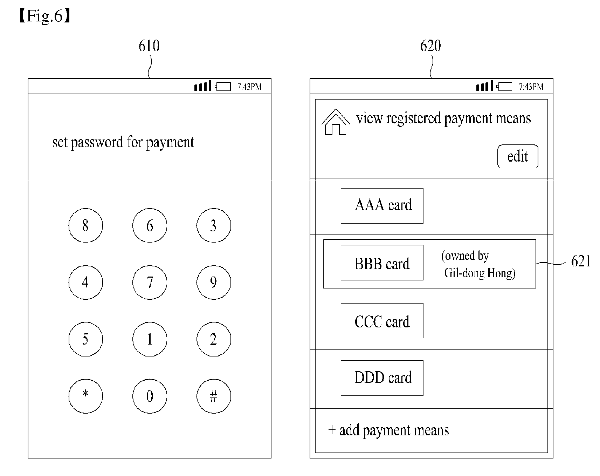

If the user B inputs a sharing acceptance intention for the payment means requested to share by the user A under control of the payment means app, as shown in FIG. 6, the terminal B 102 may display a password setting screen 610. In other words, the user B may register his or her own password for using a payment means of the user A through the password setting screen 610. Thereafter, if receiving a password from the user B through the password setting screen 610, in step S7, the terminal B 102 may send a password set by the user B together with a sharing acceptance intention of the user B for a payment means requested to share by the user A to the service server 100.

Therefore, if receiving the sharing acceptance intention of the user B from the terminal B 102 with respect to the payment means requested to share by the user A, in step S8, the service server 100 may set to share the payment means of the user A with the user B by registering the corresponding payment means in connection with the terminal B 102 and the user B. In this case, the service server 100 may perform an authentication procedure for at least one of device authentication of authenticating the terminal B or user's own authentication of authenticating the user B in a process of registering the payment means of the user A in connection with the terminal B 102 and the user B.

The terminal B 102 may access the service server 100 through the payment means management app and may request the service server 100 to send a payment means registered in connection with the terminal B 102 and the user B. The service server 100 may provide, as shown in FIG. 6, a payment means list 620 of the user B according to a payment means view request of the terminal B 102. In this case, a payment means actually owned by the user B, a payment means actually owned by the user B and requested to share with the user A or another person, and a payment means requested to share with the user B by the user A or another person may be displayed on the payment means list 620 of the user B to be independent of each other. In other words, if the user B accepts to share a payment means requested to share by the user A, the payment means 621 of the user A may be exposed on the payment means list 620 of the user B.

Thereafter, the user B may pay for goods in an affiliated store (e.g., a private educational institute) using the payment means of the user A. In this case, the affiliated store may be an offline store or an online store. The payment means of the user A, shared with the user B, may be used in face-to-face payment in an offline store and may be also used in goods payment on the Internet. Therefore, if the user B attempts to pay using the payment means of the user A, the service server 100 may provide payment information corresponding to the payment means of the user A to the terminal B 102 or an affiliated store terminal (not shown).

For one example, in step S9, if the user B selects a payment means of the user A as a payment means to be used to pay in an affiliated store terminal through the terminal B 102, in step S10, the service server 100 may immediately expose payment information (e.g., a card number, an expiration date, an issuer, and the like) of the payment means selected by the user B on a screen of the terminal B 102 or may immediately send the payment information to the affiliated store terminal to pay directly by the user B. In other words, the user B himself or herself may pay directly using the payment means of the user A in a state where the user B accepts to share the payment means requested to share by the user A. In this case, the service server 100 may notify payment details to the user A who is an actual owner of the corresponding payment means whenever the user B uses the payment means of the user A in payment of the user B.

For another example, in step S9, if the user B selects the payment means of the user A as the payment means to be used to pay in the affiliated store terminal through the terminal B 102, in step 9-1, the service server may first request the terminal A 101 to accept payment in the corresponding payment means through the terminal B 102 or the affiliated store terminal. In this case, if the user B attempts to pay using the payment means of the user A, the service server 100 may send a message for inquiring about an acceptance intention for the payment means of the user A to the user A through an SMS, a push message service, and various other communication schemes. Accordingly, in step S9-2, if the user A accepts payment using his or her payment means, in step S10, the service server 100 may expose payment information (e.g., a card number, an expiration date, an issuer, and the like) of the payment means selected by the user B on a screen of the terminal B 102 in the form of a code such as a bar code or a quick response (QR) code or may be send the payment information to an affiliated store in the form of the code. In other words, although the user B accepts to share the payment means requested to share by the user A, if the user B does not pay directly and if the user B attempts to pay using the payment means of the user A, the service server 100 may first request to the user A to accept the payment and may achieve the payment only if the user A accepts the payment.

In this case, before providing payment information corresponding to the payment means of the user A to the terminal B 102 or the affiliated store terminal (not shown), the service server 100 may perform an authentication procedure for at least one of device authentication of authenticating the terminal B 102 with respect to the payment means of the user A, user's own authentication of authenticating the user B, or transaction authentication of authenticating a password set by the user B according to selection of the user B.

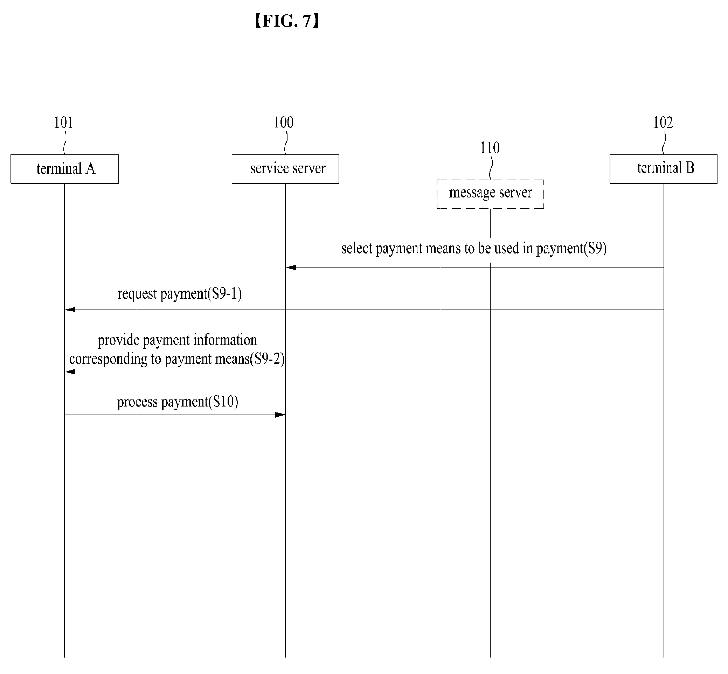

For another example, referring to FIG. 7, in step S9, if the user B selects a payment means of the user A as a payment means to be used to pay in an affiliated store through the terminal B 102, in step S9-1, the service server 100 may request the terminal A 101 to directly pay using the payment means of the user A through the terminal B 102 or the affiliated store terminal. In this case, the service server 100 may send a payment request message using the payment means of the user A to the terminal A 101, using an SMS, a push message service, and various other communication schemes. If the user A of the terminal A 101 verifies the payment request message, in step S9-2, the service server 100 may provide payment information corresponding to a payment means selected by the user B to the terminal A 101. Therefore, the user A may verify the payment request message and may directly proceed with payment requested by the user B. In other words, in step S10, the service server 100 may interwork with the terminal A 101 and may process payment in an affiliated store terminal, requested by the user B, using the payment means of the user A. In this case, if an authentication procedure for at least one of device authentication of authenticating the terminal A 101, user's own authentication of authenticating the user A, or transaction authentication of authenticating a password set by the user A is completed, the service server 100 may process the payment requested by the user B.

Therefore, if a parent sets to share his or her card with a child who is a student, it is implemented in a way of requesting the parent to pay directly when the child pays using a card of his or her parent in his or her private educational institute to prevent card accidents and the like.

Therefore, the payment means sharing method may implement a service model in which the user A and the user B may share a payment means with each other and may use together a payment means set to share.

In the payment means sharing method, a control method of a service server for sharing a payment means between terminals, a control method in a terminal which requests to share the payment means, and a control method in a terminal which is requested to share the payment means may include at least two or more operations according to details described with reference to FIGS. 1 to 7. Also, the payment means sharing method may include more reduced operations or more additional operations. An order or position of each of the operations may be changed.

Methods according to an exemplary embodiment of the inventive concept may be implemented in the form of program instructions which may be executed through various computer systems and may be recorded in a computer-readable recording medium. Particularly, an exemplary embodiment of the inventive concept may include a computer-readable recording medium having embodied thereon a program including registering a payment means in connection with a first mobile terminal, requesting at least one second mobile terminal selected by the first mobile terminal to share the payment means, and registering the payment means in connection with the second mobile terminal if the second mobile terminal accepts to share the payment means.

A program according to an exemplary embodiment of the inventive concept may be configured with a PC-based program or a mobile terminal dedicated application. A payment means management app in an exemplary embodiment of the inventive concept may be implemented in the form of a program which operates independently or may be configured in the in-app form of a specific application to operate on the specific application.

The payment means sharing method according to an exemplary embodiment of the inventive concept may be performed by controlling a user terminal at a payment means management app associated with a server system (e.g., a service server). For example, this application may include modules for controlling the user terminal to perform steps included in the above-described payment means sharing method.

For one example, this application may include a module for controlling the user terminal to read and display a list of payment means registered in a service server in connection with the user terminal, a module for controlling the user terminal to display a list of contact phone numbers registered in the user terminal if the user terminal receives an instruction to select a payment means from the list of the payment means, and a module for controlling the user terminal to request the service server to share a payment means with a counterpart terminal if the user terminal receives an instruction to select at least one counterpart terminal included in the list of the contact phone numbers. In this case, the service server may send a sharing request message for a payment means of the user terminal to the counterpart terminal and may register the payment means in connection with the counterpart terminal if the counterpart terminal accepts to share the payment means.

For another example, this application may include a module for controlling the user terminal to display a sharing request message if receiving a sharing request message for a payment means of the counterpart terminal from the service server and a module for controlling the user terminal to send a sharing acceptance intention to the service server if a user inputs the sharing acceptance intention for the payment means through a path according to link information included in the sharing request message. In this case, the service server may register the payment means in connection with the counterpart terminal, may send a sharing request message to the user terminal according to a request to share the payment by the counterpart terminal, and may register the payment means according to a sharing acceptance intention of the user terminal in connection with the user terminal.

Also, this application may be installed in the user terminal through a file provided from a file distribution system. For example, the file distribution system may include a file transfer unit (not shown) which transfers the file according to a request of the user terminal.

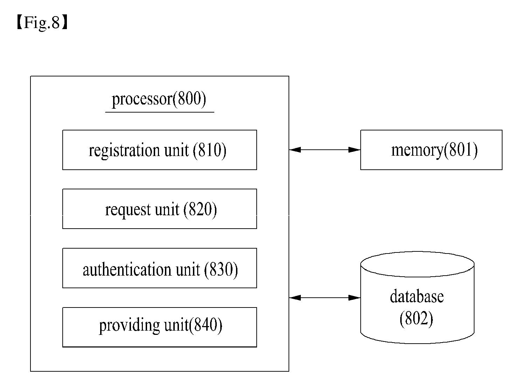

FIG. 8 is a block diagram illustrating a configuration of a payment means sharing system for sharing a payment means between users according to an exemplary embodiment of the inventive concept. Some of components of the payment means sharing system according to an exemplary embodiment of the inventive concept may be omitted the payment means sharing system or additional components may be further included in the payment means sharing system according to details of a payment means sharing method described with reference to FIGS. 1 to 7. Also, two or more components of the payment means sharing system may be combined with each other, and an operation order or a linked way between components may be changed.

As shown in FIG. 8, the payment means sharing system according to an exemplary embodiment of the inventive concept may include a processor 800, including a registration unit 810, a request unit 820, an authentication unit 830, and a providing unit 840, a memory 801, and a database 802.

The memory 801 may store a program including an instruction to share a payment means between users. Each of steps of a payment means sharing method described with reference to FIGS. 1 to 7 may be executed by the program stored in the memory 801. For example, the memory 801 may be a hard disk, a solid state disk (SDD), a secure digital (SD) card, or another storing medium.

The database 802 may be a storage which may store and maintain all information necessary for providing a mobile wallet service and a payment means sharing service and may store personal information for each user, a list of payment means for each user, authentication information for each user, payment information corresponding to each of the payment means, and the like.

The processor 800 may be a device for performing a processing operation according to an instruction of the program stored in the memory 801 and may include a microprocessor such as a central processor unit (CPU). A description will be given of detailed components of the processor 800.

The registration unit 810 may register a payment means associated with a user terminal per user. In other words, the registration unit 810 may receive payment information corresponding to each of payment means from a user through the user terminal and may store the received payment information in the database 802 in connection with the user and the user terminal to register at least one payment means for each user. Also, the registration unit 810 may receive a password for each of payment means from the user and may register the password of the corresponding payment means. In this case, the password may be used as transaction information for identifying a user A in a payment process using a payment means or in a process of requesting to share the payment.

If the user selects a specific payment means from a list of his or her own payment means and selects at least one counterpart terminal to share the selected specific payment means, the request unit 820 may request the counterpart terminal to share the payment means of the user. In this case, when the user requests to share the specific payment means, the request unit 820 may generate link information for sharing the corresponding payment means. For example, the request unit 820 may generate an abbreviated URL which includes an instruction to determine whether a payment means management app is installed in a counterpart terminal which is a shared party terminal and an instruction to change a current channel to a channel of downloading and installing the payment means management app according to whether the payment means management app is installed or a channel of registering a payment means requested to share by the user in the counterpart terminal. Therefore, the request unit 820 may interwork with a separate message server (now shown) and may send previously generated link information and a predetermined comment (e.g., the comment that the user A requests to share with his or her payment means) to the corresponding message server to request the corresponding message server to send a message to the counterpart terminal. In this case, the request unit 820 may send a sharing request intention for a payment means of the user to the counterpart terminal using an SMS, a push message service, and various other communication schemes.

If necessary, the authentication unit 830 may perform an authentication procedure for at least one of device authentication of authenticating a user terminal, user's own authentication of authenticating a user of the user terminal, or transaction authentication of verifying a password set in a payment means. In this case, the authentication unit 830 may perform device authentication by identifying subscriber information of a terminal using a serial number of the terminal, such as international mobile identity (IMI) and subscriber identity module (SIM). Also, the authentication unit 830 may perform user's own authentication by identifying the user himself or herself using authentication through a user's own mobile phone or using a public certificate. Also, the authentication unit 830 may perform transaction authentication by determining whether a password entered by the user is the same as a predetermined password with respect to a payment means. For one example, the authentication unit 830 may perform an authentication procedure for at least one of device authentication or user's own authentication in a process of registering a user's own payment means or a process of registering a payment means requested to share by a counterpart in connection with the user. For another example, the authentication unit 830 may perform an authentication procedure for at least one of device authentication, user's own authentication, or transaction authentication in a process where the user requests a counterpart terminal to share a user's own payment means. Also, for another example, the authentication unit 830 may perform an authentication procedure for at least one of device authentication, user's own authentication, or transaction authentication in a process of attempting to pay using a user's own payment means or a payment means requested to share by a counterpart.

Therefore, the registration unit 810 may receive a sharing acceptance intention for a payment means requested to share by the user from the counterpart terminal. Therefore, if a predetermined authentication procedure is completed, the registration unit 810 may register the corresponding payment means in connection with the counterpart terminal. In this case, the registration unit 810 may set such that a counterpart may use the payment means of the user by registering a password entered by the counterpart terminal with respect to the payment means requested to share by the user.

The providing unit 840 may play a role in providing overall service information to service users, may provide a list of payment means for each user, and may provide payment information corresponding to a payment means selected by the user to a user terminal or an affiliated store terminal. In addition, if a counterpart of the counterpart terminal selects the payment means of the user as a payment means to be used to pay in the affiliated store terminal, the providing unit 840 may provide the payment information corresponding to the selected payment means to the counterpart terminal or the affiliated store terminal. For one example, if the counterpart of the counterpart terminal selects a payment means of the user to pay, the providing unit 840 may immediately exposure payment information corresponding to the payment means of the user in the form of a code such as a bar code or a QR code on a screen of the counterpart terminal or may immediately send the payment information to the affiliated store terminal in the form of the code such as the bar code or the QR code to directly pay in the counterpart terminal. For another example, if the counterpart of the counterpart terminal selects a payment means of the user to pay, the providing unit 840 may first request the user terminal to accept payment through the counterpart terminal or the affiliated store terminal to pay under acceptance of the user. Therefore, if the user who is an actual owner of the payment means accepts the payment, the providing unit 840 may expose payment information corresponding to the payment means of the user in the form of a code such as a bar code or a QR code on a screen of the counterpart terminal or may send the payment information to the affiliated store terminal in the form of the code such as the bar code or the QR code. Also, for another example, if the counterpart of the counterpart terminal selects a payment means of the user to pay, the providing unit 840 may request the user who is the actual owner of the payment means to pay using the corresponding payment means through the counterpart terminal or the affiliated store terminal and may process payment requested by the counterpart terminal using payment information corresponding to the payment means of the user through interworking with the user terminal.

The above-mentioned payment means sharing system may play a role as a service platform which provides a mobile wallet service by registering and managing a payment means for each user and may provide a service for sharing a payment means between users through this service platform.

As such, according to an exemplary embodiment of the inventive concept, although a user has a limit for issuing a card or does not own a real card, since he or she may use an electronic payment means together by sharing the payment means such as a mobile card between users, the payment means sharing system may increase the convenience of use of the payment means and may more expand the use of the payment means. In addition, according to an exemplary embodiment of the inventive concept, the payment means sharing system may provide a support to safely use a payment means through a security-enhanced environment by applying several personal authentication procedures for user's own authentication, device authentication, transaction authentication, and the like in sharing the payment means between users.

The foregoing devices may be realized by hardware elements, software elements and/or combinations thereof. For example, the devices and components illustrated in the exemplary embodiments of the inventive concept may be implemented in one or more general-use computers or special-purpose computers, such as a processor, a controller, an arithmetic logic unit (ALU), a digital signal processor, a microcomputer, a field programmable array (FPA), a programmable logic unit (PLU), a microprocessor or any device which may execute instructions and respond. A processing unit may implement an operating system (OS) or one or software applications running on the OS. Further, the processing unit may access, store, manipulate, process and generate data in response to execution of software. It will be understood by those skilled in the art that although a single processing unit may be illustrated for convenience of understanding, the processing unit may include a plurality of processing elements and/or a plurality of types of processing elements. For example, the processing unit may include a plurality of processors or one processor and one controller. Also, the processing unit may have a different processing configuration, such as a parallel processor.

Software may include computer programs, codes, instructions or one or more combinations thereof and configure a processing unit to operate in a desired manner or independently or collectively control the processing unit. Software and/or data may be permanently or temporarily embodied in any type of machine, components, physical equipment, virtual equipment, computer storage media or units or transmitted signal waves so as to be interpreted by the processing unit or to provide instructions or data to the processing unit. Software may be dispersed throughout computer systems connected via networks and be stored or executed in a dispersion manner. Software and data may be recorded in one or more computer-readable storage media.

The methods according to the above-described exemplary embodiments of the inventive concept may be recorded in computer-readable media including program instructions to implement various operations embodied by a computer. The media may also include, alone or in combination with the program instructions, data files, data structures, and the like. The program instructions recorded in the media may be designed and configured specially for the exemplary embodiments of the inventive concept or be known and available to those skilled in computer software. Examples of computer-readable media include magnetic media such as hard disks, floppy disks, and magnetic tape; optical media such as CD ROM disks and DVDs; magneto-optical media such as floptical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules to perform the operations of the above-described exemplary embodiments of the inventive concept, or vice versa.

While a few exemplary embodiments have been shown and described with reference to the accompanying drawings, it will be apparent to those skilled in the art that various modifications and variations can be made from the foregoing descriptions. For example, adequate effects may be achieved even if the foregoing processes and methods are carried out in different order than described above, and/or the aforementioned elements, such as systems, structures, devices, or circuits, are combined or coupled in different forms and modes than as described above or be substituted or switched with other components or equivalents.

Therefore, other implements, other embodiments, and equivalents to claims are within the scope of the following claims.

## Claims

1. A payment means sharing method, the method comprising:
registering a payment means in connection with a first mobile terminal;
requesting at least one second mobile terminal selected by the first mobile terminal to share the payment means; and
registering the payment means in connection with the second mobile terminal if the second mobile terminal accepts to share the payment means.

2. The method of claim 1, wherein the requesting to share the payment means comprises:
sending a message, including a uniform resource locator (URL) associated with a service dedicated application, to the second mobile terminal if a sharing request signal for the payment means is received from the first mobile terminal,
wherein the registering of the payment means in connection with the second mobile terminal comprises:
performing an authentication procedure for at least one of device authentication of authenticating the second mobile terminal or user's own authentication of authenticating a user of the second mobile terminal; and
registering the payment means.

3. The method of claim 1, wherein the registering of the payment means in connection with the second mobile terminal comprises:
registering a password, entered by the second mobile terminal, with respect to the payment means.

4. The method of claim 1, further comprising:
providing payment information corresponding to the payment means to the second mobile terminal or an affiliated store terminal if the second mobile terminal selects the payment means to pay in the affiliated store terminal,
wherein the providing of the payment information corresponding to the payment means to the second mobile terminal or the affiliated store terminal comprises:
performing an authentication procedure for at least one of device authentication of authenticating the second mobile terminal for the payment means, user's own authentication of authenticating a user of the second mobile terminal, or transaction authentication of authenticating a password registered by the second mobile terminal; and
providing the payment information.

5. The method of claim 1, further comprising:
requesting the first mobile terminal to accept payment using the payment means through the second mobile terminal or an affiliated store terminal if the second mobile terminal selects the payment means to pay in the affiliated store terminal; and
providing payment information corresponding to the payment means to the second mobile terminal or the affiliated store terminal if the first mobile terminal accepts the payment using the payment means,
wherein the providing of the payment information corresponding to the payment means to the second mobile terminal or the affiliated store terminal comprises:
performing an authentication procedure for at least one of device authentication of authenticating the second mobile terminal for the payment means, user's own authentication of authenticating a user of the second mobile terminal, or transaction authentication of authenticating a password registered by the second mobile terminal; and
providing the payment information.

6. A payment means sharing method, the method comprising:
registering a payment means in connection with a first mobile terminal;
requesting at least one second mobile terminal selected by the first mobile terminal to share the payment means;
registering the payment means in connection with the second mobile terminal if the second mobile terminal accepts to share the payment means;
requesting the first mobile terminal to pay using the payment means if the second mobile terminal selects the payment means to pay in an affiliated store terminal; and
processing payment in the affiliated store terminal using payment information corresponding to the payment means by interworking with the first mobile terminal.

7. The method of claim 6, wherein the requesting to the first mobile terminal to pay using the payment means comprises:
sending a payment request message using the payment means to the first mobile terminal through a short message service (SMS) or a push message service.

8. A file distribution system for distributing a file of an application installed in a user terminal to share a payment means between users, the system comprising:
a file transfer unit configured to transfer the file according to a request of the user terminal,
wherein the application comprises:
a module for controlling the user terminal to read and display a list of payment means registered in a service server in connection with the user terminal;
a module for controlling the user terminal to display a list of contact phone numbers registered in the user terminal if an instruction to select the payment means in the list is input from the user terminal; and
a module for controlling the user terminal to request the service server to share the payment means with a counterpart terminal if an instruction to select the at least one counterpart terminal included in a list of the contact phone numbers is input from the user terminal, and
wherein the service server sends a sharing request message for the payment means to the counterpart terminal and registers the payment means in connection with the counterpart terminal if the counterpart terminal accepts to share the payment means.

9. A file distribution system for distributing a file of an application installed in a user terminal to share a payment means between users, the system comprising:
a file transfer unit configured to transfer the file according to a request of the user terminal,
wherein the application comprises:
a module for controlling the user terminal to display a sharing request message if the sharing request message for a payment means of a counterpart terminal is received from a service server; and
a module for controlling the user terminal to send a sharing acceptance intention to the service server if the sharing acceptance intention for the payment means is input from a user through a path according to link information included in the sharing request message, and
wherein the service server registers the payment means in connection with the counterpart terminal, sends the sharing request message to the user terminal according to a request to share the payment means by the counterpart terminal, and registers the payment means according to the sharing acceptance intention of the user terminal in connection with the user terminal.

10. A payment means sharing system, the system comprising:
a registration unit configured to register a payment means in connection with a first mobile terminal;
a request unit configured to request at least one second mobile terminal selected by the first mobile terminal to share the payment means; and
an authentication unit configured to perform an authentication procedure for at least one of device authentication of authenticating the second mobile terminal if the second mobile terminal accepts to share the payment or user's own authentication of authenticating a user of the second mobile terminal,
wherein the registration unit registers the payment means in connection with the second mobile terminal if the authentication procedure is completed and registers a password, entered by the second mobile terminal, with respect to the payment means, and
wherein the authentication unit performs an authentication procedure for at least one of the device authentication, the user's own authentication, or transaction authentication of authenticating the password with respect to the payment means when the second mobile terminal attempts to pay using the payment means.
